# EUROPÄISCHE PATENTSCHRIFT

(11) **EP 0 457 359 B1**
(45) Veröffentlichungstag und Bekanntmachung des Hinweises auf die Patenterteilung: **09.03.1994**
(21) Anmeldenummer: 91108196.6
(22) Anmeldetag: 04.06.1987
(51) Int. Cl.: C02F 1/26, C02F 1/28, B01D 11/04

(54) **Verfahren zum Abtrennen von organischen Verbindungen aus Wasser durch Extraktion**
Method of extracting organic compounds from water
Procédé d'extraction de composés organiques de l'eau

(30) Priorität: 04.06.1986 DE 3618698
(43) Veröffentlichungstag der Anmeldung: 21.11.1991
(62) Teilanmeldung aus: 87108100.6
(73) Patentinhaber: PASSAVANT-WERKE AG, 65322 Aarbergen 7 (DE)
(72) Erfinder: Belouschek, Peter, Dr. rer. nat., W-4300 Essen 18 (DE); Weiler, Walter, Dipl.-Ing., W-6252 Diez (DE)
(74) Vertreter: Glawe, Delfs, Moll & Partner

(56) Entgegenhaltungen:
- EP-A- 0 106 970
- DE-A- 2 004 314
- DE-A- 3 415 464
- FR-A- 2 251 525
- FR-A- 2 340 910
- US-A- 4 205 962
- US-A- 4 276 179
- US-A- 4 547 293

## Beschreibung

Die Erfindung betrifft ein Verfahren zum Abtrennen von organischen Verbindungen aus Wasser durch Extraktion von der im Oberbegriff des Anspruchs 1 angegebenen Art.

Ein Verfahren dieser Art ist aus DE-A-34 15 464 bekannt. Bei diesem bekannten Verfahren werden die Extraktion und die Abtrennung des Extraktionsmittels vom Wasser in zwei getrennten Stufen durchgeführt. Zuerst wird in Wasser fein dispergiertes Extraktionsmittel mit dem zu reinigenden Wasser in einem Extraktionsbehälter vermischt. Nach einer für die Extraktion ausreichenden Verweilzeit im Extraktionsbehälter wird das Wasser-Extraktionsmittel-Gemisch aus dem Extraktionsbehälter abgezogen und in einen gesonderten Filterbehälter geleitet, in welchem sich die als Adsorptionsfilter wirkende offenzellige Stützstruktur befindet. In diesem Filterbehälter trennt sich das Extraktionsmittel vom Wasser, wobei sich allmählich eine schwimmende Extraktionsmittelschicht bildet, die mit zunehmender Dicke auch bis in die Stützstruktur hineinreicht.

Ähnliche Extraktionsverfahren sind in DE-A-29 01 261, EP-B-0 013 659 und AT-A-2169/82 beschrieben.

Der Erfindung liegt die Aufgabe zugrunde, ein Verfahren der genannten Art so auszubilden, daß bei einfacher Verfahrensdurchführung eine besonders effektive Wechselwirkung des zu reinigenden Wassers mit dem Extraktionsmittel und damit ein besonders hoher Wirkungsgrad der Extraktion erzielt wird.

Die erfindungsgemäße Lösung der Aufgabe ist im Anspruch 1 angegeben. Die Unteransprüche beziehen sich auf weitere vorteilhafte Ausgestaltungen. Die erfindungsgemäße Lösung beruht auf dem Prinzip, das Wasser durch eine zusammenhängende Schicht des Extraktionsmittels zu leiten und ihm gleichzeitig oder anschließend durch eine Stützstruktur mit großer innerer Oberfläche einen in viele feine Strömungskanäle aufgeteilten Strömungsweg aufzuzwingen und es in diesen Strömungskanälen in innigen Kontakt mit dem Extraktionsmittel zu bringen. Die Stützstruktur dispergiert dabei das zu reinigende Abwasser in hohem Maße, so daß lange Kontaktzeiten mit dem Extraktionsmittel zustandekommen und eine ausreichende Extraktion auch bei an sich ungünstigen Verteilungskoeffizienten erzielt wird. Ferner wirkt der nicht geflutete Teil der Stützstruktur auf die mitgeschwemmten Tröpfchen des Extraktionsmittels wie ein Adsorptions- und/oder Koaleszenzfilter, so daß das abgezogene gereinigte Wasser weitgehend frei von Extraktionsmittelresten ist. Da das Extraktionsmittel in kompakter Schicht vorliegt, bedarf es weder einer laufenden gesteuerten Zudosierung des Extraktionsmittels, noch kann ein Extraktionsmittelüberschuß ungenutzt verbraucht werden.

Ein spezielles Verfahren muß angewendet werden, wenn die organischen Verbindungen im gasförmigen Zustand vorliegen, z.B. aus Geräten für die chemische Reinigung. Diese Reinigungsmittelgase und -dämpfe werden üblicherweise einer Gaswäsche unterworfen; es bereitet aber erhebliche Schwierigkeiten, diese meist halogenorganischen Verbindungen aus dem Abwasser zu eliminieren. Es wird deshalb meist im geschlossenen Kreislauf gearbeitet. Eine Lösung des Problems ist durch das vorliegende Extraktionsverfahren gegeben, indem die gasförmigen Verbindungen durch Strippen in Wasser gelöst werden und das Wasser der Extraktion in der Stützstruktur unterzogen wird. Es ist auch denkbar, den Strippvorgang gleichzeitig mit der Extraktion vorzunehmen, das Wasser also gleichzeitig mit dem Gas in die Stützstruktur einzuleiten. Eine besonders vorteilhafte Verfahrensführung ist jedoch dadurch gegeben, daß man die Gase unmittelbar durch die nur mit Extraktionsmittel geflutete Stützstruktur leitet und Sie dadurch eliminiert.

Das erfindungsgemäße Verfahren wird im folgenden anhand einiger Ausführungsformen unter Bezugnahme auf die Zeichnungen erläutert. Es zeigt:
- Fig. 1: die schematische Darstellung einer Anlage zur Durchführung des erfindungsgemäßen Verfahrens;
- Fig. 2-5: schematische Vertikalschnitte durch einen Teilbereich des Extraktionsbeckens von Fig. 1 bei verschiedenen Verfahrensvarianten.

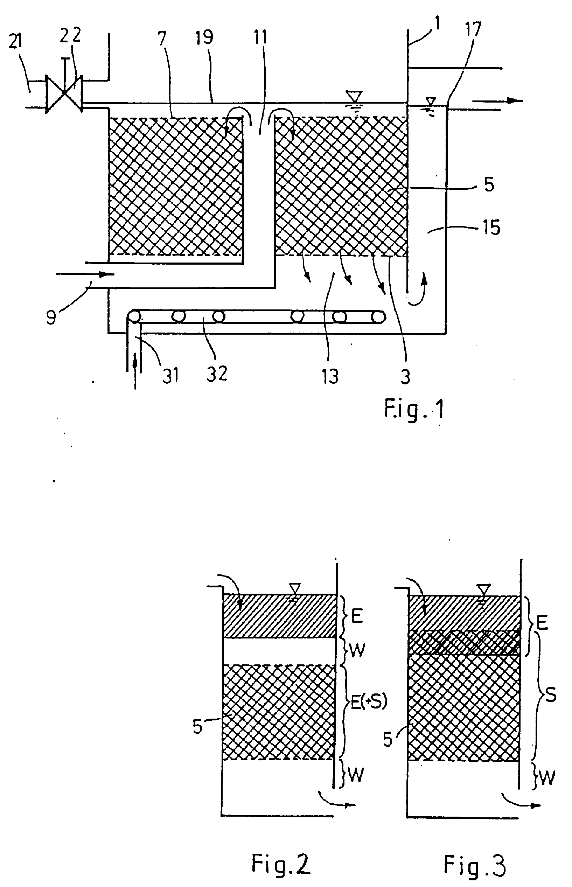

In Fig. 1 ist mit 1 ein Becken oder Gefäß bezeichnet, welches auf einem perforierten Stützboden 3 eine Füllung 5 aus einem Material trägt, welches eine poröse oder gitterförmige Stützstruktur mit zahlreichen Zwischenräumen und Strömungskanälen bildet. Hierfür in Frage kommende Materialien werden weiter unten noch näher erläutert. Die Stützstruktur kann oben durch einen weiteren perforierten Boden 7 abgedeckt sein, insbesondere, wenn sie aus einer losen Schüttung porösen Granulats oder dgl. besteht. Das zu reinigende Wasser wird durch die Leitung 9 zugeführt und gelangt über ein Steigrohr 11 an die Oberseite der Stützstruktur 5 und durchströmt diese von oben nach unten. Das gereinigte Wasser wird aus dem Raum 13 unterhalb des Bodens 3 über ein Steigrohr 15 und eine Überlaufkante 17 abgezogen. Die Höhe der Überlaufkante 17 und der Strömungswiderstand der Stützstruktur 5 bestimmen die Höhe des sich im Becken 1 einstellenden Flüssigkeitsspiegels 19.

Die Stützstruktur 5 kann auf verschiedene, im folgenden noch erläuterte Arten mit dem Extraktionsmittel geflutet oder beladen sein. Bei der Strömung des zu reinigenden Wasser durch die zahlreichen feinen Strömungskanäle der Stützstruktur 5 gelangen die abzutrennenden organischen Verbindungen, insbesondere halogenierte Kohlenwasserstoffe, in innigen Kontakt mit dem Extraktionsmittel und werden aus dem Wasser abgetrennt.

Wenn nach einiger Zeit das Extraktionsmittel erschöpft, d.h. mit den abgetrennten organischen Verbindungen weitgehend gesättigt und demnach ineffektiv geworden ist, kann das Extraktionsmittel durch einen Rückspülvorgang von der Stützstruktur 5 getrennt und über die Leitung 21 mit Absperrorgan 22 abgezogen werden. Die Abtrennung der organischen Verbindungen kann in an sich bekannter Weise mittels Wasserdampfdestillation erfolgen. Das regenerierte Extraktionsmittel kann mittels einer Pumpe dem Extraktionsbecken 1 wieder zugeführt werden, um sich wieder an die Stützstruktur anzulagern. Für den Rückspülvorgang kann Spülflüssigkeit und/oder Spülluft oder aber das Extraktionsmittel selbst über eine oder mehrere Leitungen 31 und ein Verteilersystem 32 unterhalb der Stützstruktur 5 zugeführt werden.

Als Material für die Stützstruktur 5 kommt entweder eine Schüttung aus einem körnigen bzw. teilchenförmigen Material, wie z.B. Raschigringe oder dgl. aus Glas oder Kunststoff, Teilchen aus geschäumtem Perlit oder Blähton und dgl., oder auch eine ein- oder mehrteilige Füllung aus einem raumgitterförmigen Material, insbesondere einem retikulierten geschäumten Kunststoff, wie Polyurethan, in Frage. Auch eine Füllung aus Mineralfasern in Form eines Wirrfaservlieses ist denkbar.

Ganz besonders vorteilhaft ist es, wenn das die Stützstruktur bildende Material aus einem Werkstoff besteht oder mit einem solchen beschichtet ist, der für das verwendete Extraktionsmittel eine koaleszierende und/oder adsorbierende Wirkung hat. Der nicht belegte oder geflutete Teil der Stützstruktur hat dann für das verwendete Extraktionsmittel die Eigenschaft eines Filters, welches vom zu reinigenden Wasser etwa mitgerissene Teilchen oder Tröpfchen des Extraktionsmittels zurückhalten kann. Wenn das die Stützstruktur bildende Material selbst nicht die gewünschte Oberflächeneigenschaft aufweist, kann es mit einem entsprechenden Material, insbesondere einem geeigneten Kunstharz, aber auch mit Aktivkohle, Metall oder dgl., beschichtet sein. Als Beschichtungsverfahren kommen Aufdampfen, Elektrolyse, Sinterkleben oder dgl. in Frage.

Das für die Extraktion verwendete Extraktionsmittel ist nicht bleibender Bestandteil der Stützstruktur 5, sondern wird mit dieser temporär in Verbindung gebracht. Das Extraktionsmittel selbst ist allgemein eine lipophile Flüssigkeitsphase, wobei insbesondere für die Abwasserreinigung nur solche Extraktionsmittel in Frage kommen, die sich aus dem Wasser durch Schwerkrafttrennung mindestens mit einem Abscheidegrad abscheiden lassen, der den Bestimmungen über Direkt- und Indirekteinleitung von Abwässern genügt. Eine aromatenfreie flüssige Paraffinfraktion, wie aus dem Stand der Technik bekannt, ist auch bei dem erfindungsgemäßen Verfahren vorzugsweise als Extraktionsmittel geeignet. Es kommen jedoch auch andere Extraktionsmittel wie Öle und Wachse in Frage, wobei z.B. sogar bestimmte Altöle in besonders kostengünstiger Weise als Extraktionsmittel verwendet werden können.

Eine Ausführungsform des erfindungsgemäßen Verfahrens wird durch Fig. 2 veranschaulicht. Hier ist oberhalb der Stützstruktur 5 ständig eine schwimmende Extraktionsmittelschicht E vorhanden, und das Wasser wird mittels des Steigrohres 11 in Fig. 1 so zugeführt, daß es oberhalb oder innerhalb der Extraktionsmittelschicht E mündet und somit die Extraktionsmittelschicht E durchströmen muß. Es findet somit bereits in der Extraktionsmittelschicht E ein inniger Kontakt mit dem Extraktionsmittel und eine Extraktion der abzutrennenden organischen Verbindungen statt. Aus der Extraktionsmittelschicht E strömt das Wasser dann nach überwinden einer Zwischenschicht W in die Stützstruktur 5 ein, die entweder zu Beginn extraktionsmittelfrei oder aber an ihren inneren Oberflächen bereits mit Extraktionsmittel beladen sein kann. Es findet hier eine weitere Extraktion von etwa noch vorhandenen organischen Verbindungen statt, und ferner werden etwaige Extraktionsmitteltröpfchen, die aus der Schicht E mitgerissen werden, in der Stützstruktur 5 zurückgehalten. Das gereinigte Wasser wird unterhalb der Stützstruktur 5 abgezogen. Wenn sich das Extraktionsmittel in der Stützstruktur 5 zu größeren Tröpfchen ansammelt und sich ablöst, dann schwimmen diese Tröpfchen nach oben auf und vereinigen sich mit der schwimmenden Extraktionmittelschicht E.

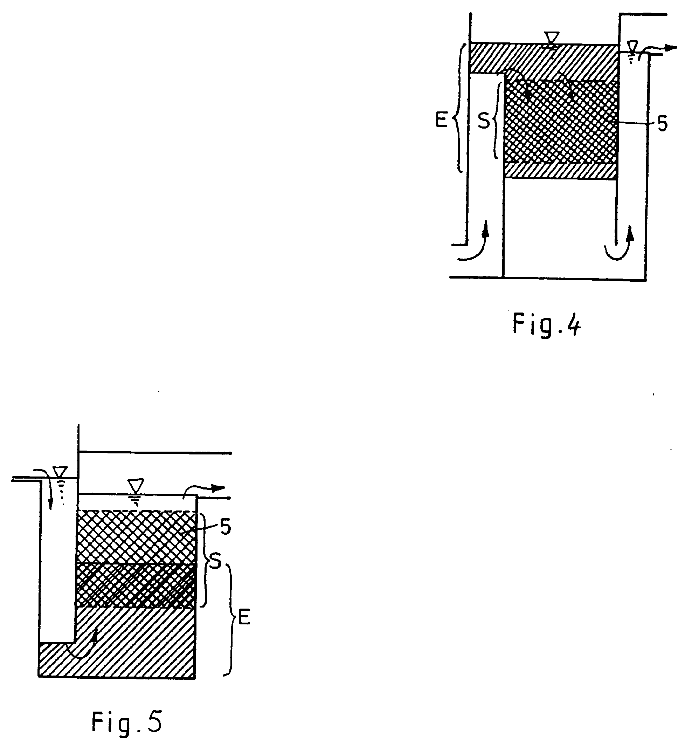

Eine besonders bevorzugte Ausführungsform wird durch Fig. 3 veranschaulicht. Hier befindet sich oberhalb der Stützstruktur 5 ständig eine schwimmende Extraktionsmittelschicht E von solcher Dicke, daß sie von oben in die Stützstruktur 5 hineinragt, so daß der obere Bereich der Stützstruktur 5 ständig von dem flüssigen Extraktionsmittel E durchflutet ist. Dem von oben her in die Extraktionsmittelschicht E eingeleiteten Wasser wird beim Einströmen in die Stützstruktur 5 eine in viele feinverteilte Strömungskanäle aufgeteilte Strömung aufgezwungen, wobei jeder dieser Strömungskanäle im oberen Bereich vom Extraktionsmittel E ausgefüllt ist. Es wurde gefunden, daß hierdurch eine besonders wirksame und intensive Wechselwirkung des Wassers mit dem Extraktionsmittel erzielt wird. Der unterhalb der Extraktionsmittelschicht E befindliche restliche Teil der Stützstruktur 5 kann entweder an seinen Oberflächen mit einer Extraktionsmittelschicht versehen sein, so daß das Wasser unterhalb der Schicht E eine weitere Extraktionsstrecke vorfindet, oder die Stützstruktur 5 kann unterhalb der Extraktionsmittelschicht E frei von Extraktionsmittel sein, so daß sie nur als Filter zum Auffangen und Zurückhalten von Extraktionsmitteltröpfchen, die aus der Schicht E mitgerissen werden, wirkt.

Bei den anhand von Fig. 1-3 erläuterten Ausführungsbeispielen wird die Stützstruktur vorteilhafterweise von oben nach unten durchströmt. Es ist jedoch auch die umgekehrte Anordnung mit Wasserströmung von unten nach oben möglich.

Die in Fig. 4 veranschaulichte Ausführungsform arbeitet mit einer kompakten schwimmenden Extraktionsmittelschicht E, deren Dicke größer ist als die Höhe der Stützstruktur 5, so daß sie nach oben und unten der die Stützstruktur 5 hinausragt und das von oben zuströmende Wasser zuerst in die Extraktionsmittelschicht E und dann in die von dieser geflutete Stützstruktur 5 einströmt.

Zwar wird in der Regel ein flüssiges Extraktionsmittel verwendet werden, welches leichter als Wasser ist und auf dem Wasser schwimmt. Es kann jedoch in besten Fällen auch vorteilhaft sein, ein Extraktionsmittel zu verwenden, welches schwerer als Wasser ist. Eine entsprechende Ausführungsvariante ist in Fig. 5 veranschaulicht. Hier befindet sich am Boden des Gefäßes eine Extraktionsmittelschicht E von solcher Höhe, daß sie teilweise von unten in die Stützstruktur 5 hineinragt und deren unteren Bereich durchflutet. Oberhalb der Stützstruktur 5 befindet sich Wasser. Das von unten zugeführte, zu reinigende Wasser durchströmt zuerst die Extraktionsmittelschicht E und dann die Stützstruktur 5. Die Ausführungsform nach Fig. 5 stellt somit die Umkehrung der Ausführungsform nach Fig. 3 dar.

Es ist auch möglich, das erfindungsgemäße Verfahren so zu betreiben, daß zwischen zwei verschiedenen beschriebenen Betriebszuständen abgewechselt wird. Beispielsweise kann man, ausgehend von der Ausführungsform nach Fig. 2, durch zeitweises Absenken des Wasserspiegels die Extraktionsmittelschicht E in den oberen Bereich des Festbettes F hinein verlegen und dadurch den Betriebszustand nach Fig. 3 herstellen, um z.B. eine periodische Auffrischung der Belegung des oberen Bereiches der Stützstruktur 5 mit dem Extraktionsmittel zu bewirken.

Schließlich ist auch der Fall denkbar, daß die Dichte des Extraktionsmittels nur wenig unter 1 und die Dichte der zu extrahierenden Verbindungen erheblich über 1 ist. Dann kann die Dichte des beladenen Extraktionsmittels auf über 1 steigen, so daß eine vorher vorhandene Schwimmschicht zu Boden sinkt und die Durchströmfolge sich dann umkehrt. Apparativ ist diesem Wechsel durch die in Fig. 4 und 5 gezeigte Flüssigkeitsführung und -haltung Rechnung getragen.

Um bei den Ausführungsformen nach Fig. 2, 3, 4, und 5 die kompakte flüssige Extraktionsmittelschicht E zu regenerieren, braucht diese lediglich abgezogen und in einem Extraktionsgefäß in geeigneter Weise behandelt zu werden. Zusätzlich muß das an der inneren Oberfläche der Stützstruktur 5 angelagerte Extraktionsmittel durch einen Rückspülvorgang entfernt werden, was durch Zuleitung eines Rückspülmediums wie Wasser und/oder Luft über die Leitung 31 und den Verteiler 32 von Fig. 1 geschieht. Vorzugsweise wird Heißwasser verwendet, dem zusätzlich waschaktive Substanzen oder organische Lösungsmittel beigefügt werden können. Auch Zuführung von Heißdampf ist möglich. Zusammen mit dem Rückspülmedium Luft kann auch gleich regeneriertes Extraktionsmittel zugeführt werden, so daß die Stützstruktur sogleich wieder belegt wird.

Eine anderen Methode zur Erneuerung des Extraktionsmittels sieht vor, zusätzlich zu der von unten eingeperlten Luft von oben Wasser aufzugeben und gleichzeitig unten eine die Wasserzufuhr übersteigende Menge Wasser abzuziehen. Dadurch wird die Stützstruktur schichtweise von oben nach unten rückgespült. Der aus erschöpftem Extraktionsmittel und Wasser bestehende Rückspülschlamm wird in einem separaten Behälter einem Trennvorgang unterworfen und das dekantierte Wasser nochmals durch die Extraktionsstufe geleitet.

In besonders gelagerten Fällen können mehrere Stufen hintereinandergeschaltet werden, die nacheinander durchströmt werden. Dabei kann die Porengröße der Stützstrukturen in Durchströmrichtung abnehmen. Es kann in den Stufen mit unterschiedlichen Extraktionsmitteln gearbeitet werden, um die Extraktion an die zu entfernenden Verbindungen anpassen zu können. Die Regenerierung der Stützstrukturen erfolgt vorteilhafterweise zu verschiedenen Zeiten.

Handelt es sich bei den Halogenorganen um leichtflüchtige Verbindungen, dann muß das ganze System gasdicht gekapselt werden. Die Gase oder Dämpfe werden aufgefangen und einer Strippung unterzogen, wie weiter vorne beschrieben.

## Patentansprüche

1. Verfahren zum Abtrennen von organischen Verbindungen, insbesondere halogenierten Kohlenwasserstoffen, aus Wasser durch Extraktion mittels eines mit Wasser nicht mischbaren, lipophilen Extraktionsmittels, insbesondere Paraffin, Wachs und/oder Öl,
wobei das die organischen Verbindungen enthaltende Wasser mit dem Extraktionsmittel in innigen Kontakt gebracht wird und das Wasser durch eine in einem Behälter angeordnete, nicht aus dem Extraktionsmittel bestehende offenzellige Stützstruktur mit großer innerer Kontaktoberfläche, die zahlreiche feine Strömungswege bildet, geleitet wird,
dadurch **gekennzeichnet,**
daß in dem Behälter ständig eine zusammenhängende Schicht des Extraktionsmittels derart aufrechterhalten wird, daß sie die Stützstruktur über mindestens einen Teil ihrer Höhe durchflutet und/oder ihr vorgelagert ist,
und daß das zu reinigende Wasser in die Schicht des Extraktionsmittels eingeleitet und dadurch mit dem Extraktionsmittel in Kontakt gebracht wird und die Extraktion beim Durchströmen der Extraktionsmittelschicht und beim anschließenden Durchströmen der Stützstruktur durchgeführt wird.

2. Verfahren nach Anspruch 1, dadurch **gekennzeichnet,** daß die Stützstruktur aus einer Schüttung eines körnigen Materials oder von Füllkörpern besteht.

3. Verfahren nach Anspruch 1, dadurch **gekennzeichnet,** daß die Stützstruktur aus einem offenzellig geschäumten Material besteht.

4. Verfahren nach Anspruch 1, dadurch **gekennzeichnet,** daß das Wasser nach dem Durchströmen der zusammenhängenden Extraktionsmittelschicht und/oder der Stützstruktur einen extraktionsmittelfreien Raum durchströmt, in welchem sich mitgerissene Extraktionsmittelteilchen durch Schwerkraft vom Wasser abtrennen und wieder an die Extraktionsmittelschicht und/oder die Stützkonstruktion anlagern können.

5. Verfahren nach einem der Ansprüche 1 bis 4, dadurch **gekennzeichnet,** daß die Stützstruktur aus einem Werkstoff besteht bzw. mit einem Werkstoff beschichtet ist, der aufgrund seiner Oberflächeneigenschaften adsorbierend und/oder koaleszierend bezüglich des Extraktionsmittels wirkt.

6. Verfahren nach einem der Ansprüche 1 bis 5, dadurch **gekennzeichnet,** daß dem Wasser vor seiner Einleitung in das Extraktionsmittel ein lösliches, sorptionsbegünstigendes Mittel, insbesondere ein längerkettiger Alkohol und/oder ein nichtionogenes Tensid zugeführt wird.

7. Verfahren nach einem der Ansprüche 1 bis 6, dadurch **gekennzeichnet,** daß das Extraktionsmittel von Zeit zu Zeit durch Rückspülen von der Stützstruktur entfernt und regeneriert wird.

8. Verfahren nach Anspruch 7, dadurch **gekennzeichnet,** daß bei von oben nach unten durchströmter Stützstruktur das Extraktionsmittel dadurch entfernt wird, daß zunächst Luft bei gleichbleibendem Wasserstand unten eingeperlt und dann bei fortgesetzter Luftzufuhr der Wasserstand bis unter die Stützstruktur abgesenkt wird.

9. Verfahren nach Anspruch 7, dadurch **gekennzeichnet,** daß das beladene Extraktionsmittel durch zyklisches Absenken und Anheben des Wasserspiegels von der Stützstruktur entfernt wird.

10. Verfahren nach einem oder mehreren der vorstehenden Ansprüche, dadurch **gekennzeichnet,** daß das erschöpfte Extraktionsmittel permanent erneuert wird, indem es im Gleichstrom mit dem zu reinigenden Abwasser durch die Stützstruktur geleitet und oben abgezogen wird.

11. Verfahren nach Anspruch 7, mit einer getrennt von der Stützstruktur angeordneten zusammenhängenden Extraktionsmittelschicht, dadurch **gekennzeichnet,** daß vor dem Rückspülen der Stützstruktur die Extraktionsmittelschicht abgezogen wird.

12. Verfahren nach einem oder mehreren der vorstehenden Ansprüche, bei dem die organischen Verbindungen im gasförmigen Zustand anfallen, dadurch **gekennzeichnet,** daß die gasförmigen Verbindungen durch Strippen in Wasser gelöst werden und dann das Wasser der Extraktion in der Stützstruktur unterzogen wird.

13. Verfahren nach einem oder mehreren der Ansprüche 1 bis 12, bei dem die organischen Verbindungen im gasförmigen Zustand anfallen, dadurch **gekennzeichnet,** daß die Gase zusammen mit sie strippendem Wasser durch die Stützstruktur geleitet werden.

14. Verfahren nach einem oder mehreren der Ansprüche 1 bis 12, bei dem die organischen Verbindungen im gasförmigen Zustand anfallen, dadurch **gekennzeichnet,** daß man die Gase durch die nur mit Extraktionsmittel gefüllte Stützstruktur leitet.

## Claims

1. A method for separating organic compounds, especially halogenated hydrocarbons, from water by extraction using a lipophil extraction agent that is not mixable with water, especially paraffin, wax and/or oil, wherein the water containing the organic compounds is brought into intimate contact with the extraction agent and the water is conducted through an open-cell support structure disposed in a container and not consisting of the extraction agent, said support structure having a large inner contact surface forming numerous fine flow channels,
**characterized** in that in said container a continuous layer of said extraction agent is maintained such that the layer penetrates and fills said support structure over at least part of its height and/or is placed upstream of the support structure, and that the water to be cleaned is fed into the open-cell support structure and thereby brought into contact with the extraction agent and said extraction is carried out during passage through the layer of extraction agent and subsequent passage through the support structure.

2. A method as claimed in claim 1,
**characterized** in that the support structure consists of a bed of a granular material or of filler packing elements.

3. A method as claimed in claim 1,
**characterized** in that the support structure consists of an open-cell foamed material.

4. A method as claimed in claim 1,
**characterized** in that after flowing through the continuous layer of extraction agent and/or the support structure the water will flow through a space containing no extraction agent where entrained extraction agent particles can separate from the water by gravity and can recombine with the extraction agent layer and/or with the support structure.

5. A method as claimed in any of claims 1 to 4,
**characterized** in that the support structure consists of a material or is coated with a material which due to its surface properties has an adsorbing and/or coalescing effect with regard to the extraction agent.

6. A method as claimed in any of claims 1 to 5,
**characterized** in that a soluble sorption-conducive agent, especially a long-chain alcohol and/or a nonionic surface-active agent is fed to the water before latter is being conducted into the extraction agent.

7. A method as claimed in any of claims 1 to 6,
**characterized** in that the extraction agent is from time to time removed from the support structure by means of backwashing and regenerated.

8. A method as claimed in claim 7,
characterized in that in a support structure, through which flows in a downward direction from above, the extraction agent is removed by first bubbling-in air from below at a constant water level and subsequently, at continued supply of air, lowering the water level to a level below the support structure.

9. A method as claimed in claim 7,
**characterized** in that the loaded extraction agent is removed from the support structure by cyclic lowering and lifting of the water level.

10. A method as claimed in one or several of the previous claims,
**characterized** in that the exhausted extraction agent is permanently renewed by conducting it through the support structure co-currently with the water to be cleaned and draining it at the top.

11. A method as claimed in claim 7 using a continuous layer of extraction agent spaced from said support structure,
**characterized** in that prior to backwashing of the support structure the layer of extraction agent is drained.

12. A method as claimed in one or several of the previous claims, wherein the organic compounds exist in the gaseous state,
**characterized** in that the gaseous compounds are dissolved in water by stripping and that subsequently the water is subjected to extraction in the support structure.

13. A method as claimed in one or several of claims 1 to 11, wherein the organic compounds exist in the gaseous state,
**characterized** in that the gases are conducted through the support structure together with the water that strips them.

14. A method as claimed in one or several of claims 1 to 13,
wherein the organic compounds exist in the gaseous state, **characterized** in that the gases are conducted through the support structure filled with extraction agent only.

## Revendications

1. Procédé destiné à séparer des composés organiques, en particulier des hydrocarbures halogénés, de l'eau par extraction au moyen d'un agent d'extraction lipophile non miscible dans l'eau, en particulier de paraffine, de cire et/ou d'huile, l'eau contenant les composés organiques étant mise en contact intime avec l'agent d'extraction, et l'eau étant dirigée à travers une structure porteuse à alvéoles ouverts disposée dans un récipient, constituée d'un autre matériau que l'agent d'extraction et présentant une grande surface de contact intérieure qui forme de nombreux et fins trajets d'écoulement, caractérisé en ce qu'une couche cohérente d'agent d'extraction est maintenue en permanence dans le récipient, de façon qu'elle imbibe la structure porteuse sur au moins une partie de sa hauteur et/ou la précède, et en ce que l'eau à épurer est introduite dans la couche de l'agent d'extraction et est ainsi mise en contact avec l'agent d'extraction, et l'extraction est effectuée lors de la traversée de la couche d'agent d'extraction et lors de la traversée ultérieure de la structure porteuse.

2. Procédé selon la revendication 1, caractérisé en ce que la structure porteuse est constituée par un matériau granuleux en vrac ou par des corps de remplissage.

3. Procédé selon la revendication 1, caractérisé en ce que la structure porteuse est constituée par un matériau moussé à alvéoles ouverts.

4. Procédé selon la revendication 1, caractérisé en ce que, après avoir traversé la couche cohérente d'agent d'extraction et/ou la structure porteuse, l'eau traverse un espace qui est exempt d'agent d'extraction et dans lequel des particules entraînées d'agent d'extraction se séparent de l'eau par gravité et peuvent se redéposer sur la couche d'agent d'extraction et/ou sur la structure porteuse.

5. Procédé selon l'une des revendications 1 à 4, caractérisé en ce que la structure porteuse est constituée ou revêtue d'un matériau qui, de par ses qualités de surface, a une action coalescente et/ou adsorbante sur l'agent d'extraction.

6. Procédé selon l'une des revendications 1 à 5, caractérisé en ce qu'un agent soluble favorisant la sorption, en particulier un alcool à plus longue chaîne et/ou un agent de surface non ionogène, est ajouté à l'eau avant qu'elle ne soit introduite dans l'agent d'extraction.

7. Procédé selon l'une des revendications 1 à 6, caractérisé en ce que l'agent d'extraction est périodiquement éliminé de la structure porteuse et régénéré par un lavage à contre-courant.

8. Procédé selon la revendication 7, caractérisé en ce que, lorsque la structure porteuse est parcourue de haut en bas, l'agent d'extraction est éliminé en ce que, dans un premier temps, de l'air est envoyé par le bas sous forme de bulles alors que le niveau d'eau est constant et, ensuite, le niveau d'eau est abaissé jusqu'en dessous de la structure porteuse alors que l'alimentation en air se poursuit.

9. Procédé selon la revendication 7, caractérisé en ce que l'agent d'extraction chargé est éliminé de la structure porteuse par un mouvement cyclique de descente et de montée du niveau de l'eau.

10. Procédé selon une ou plusieurs des revendications précédentes, caractérisé en ce que l'agent d'extraction épuisé est renouvelé en permanence en étant dirigé à travers la structure porteuse dans le même sens que les eaux usées à épurer, et est évacué vers le haut.

11. Procédé selon la revendication 7, comprenant une couche cohérente d'agent d'extraction distincte de la structure porteuse, caractérisé en ce que la couche d'agent d'extraction est évacuée avant le lavage à contre-courant de la structure porteuse.

12. Procédé selon une ou plusieurs des revendications précédentes, dans lequel les composés organiques sont présents à l'état gazeux, caractérisé en ce que les composés gazeux sont dissous dans l'eau par stripping, et l'eau est ensuite soumise à l'extraction dans la structure porteuse.

13. Procédé selon une ou plusieurs des revendications 1 à 12, dans lequel les composés organiques sont présents à l'état gazeux, caractérisé en ce que les gaz sont dirigés à travers la structure porteuse en même temps que l'eau qui en effectue le stripping.

14. Procédé selon une ou plusieurs des revendications 1 à 12, dans lequel les composés organiques sont présents sous forme gazeuse, caractérisé en ce que les gaz sont dirigés à travers la structure porteuse uniquement remplie d'agent d'extraction.
